# FASCICULE DE BREVET EUROPEEN

(11) **EP 3 055 080 B1**
(45) Date de publication et mention de la délivrance du brevet: **21.03.2018**
(21) Numéro de dépôt: 14790235.7
(22) Date de dépôt: 09.10.2014
(51) Int. Cl.: B08B 9/032, E03B 7/00

(54) **PROCÉDÉ DE TRAITEMENT À DES FINS DE NETTOYAGE DES CANALISATIONS D'UN RESEAU D'EAU POTABLE D'UN AERONEF**
VERFAHREN ZUR BEHANDLUNG VON ROHRLEITUNGEN EINES TRINKWASSERNETZES EINES FLUGZEUGS FÜR REINIGUNGSZWECKE
METHOD OF TREATING THE PIPES OF A DRINKING WATER NETWORK OF AN AIRCRAFT, FOR CLEANING PURPOSES

(30) Priorité: 10.10.2013 FR 1359846
(43) Date de publication de la demande: 17.08.2016
(73) Titulaire: Prodose, 31660 Bessieres (FR)
(72) Inventeur: BOUKARI, Morou, F-31300 Toulouse (FR)
(74) Mandataire: Richebourg, Michel François
(86) Numéro de dépôt international: PCT/FR2014/052564
(87) Numéro de publication internationale: WO 2015/052443

(56) Documents cités:
- WO-A2-2010/142924
- FR-A1- 2 975 928
- US-A- 5 405 452
- US-A1- 2011 049 187

## Description

### DOMAINE D'APPLICATION DE L'INVENTION

La présente invention a trait au domaine des aéronefs et notamment aux adaptations permettant de réaliser dans les meilleures conditions le traitement à des fins de nettoyage des canalisations d'un réseau d'eau potable d'un aéronef.

### DESCRIPTION DE L'ART ANTÉRIEUR

Les aéronefs et notamment ceux susceptibles d'accueillir des passagers sont équipés d'un circuit de distribution d'eau potable (à des fins d'alimentation, d'hygiène, etc...) qui comprend au moins un réservoir et une pluralité de canalisations permettant de créer des points d'entrée ou de sortie mis à disposition des passagers et/ou des opérateurs.
Classiquement, l'eau potable distribuée dans un aéronef est traitée selon différentes solutions :
- des moyens chimiques (chlore et dérivés, oxygène actif, etc...),
- des moyens de filtration (par exemple cartouche de filtration à charbon, par échange d'ions, etc...),
- etc...
Néanmoins, du fait notamment de l'utilisation non continue des canalisations de distribution, à la longue ces différents moyens n'empêchent pas le dépôt d'impuretés, de biofilms et/ou l'apparition de bactéries sur les parois intérieures des canalisations.

L'aéronef doit ainsi subir régulièrement une opération de traitement de son réseau d'eau potable à des fins de nettoyage, opération qui nécessite alors son immobilisation au sol.

Il est alors particulièrement important que cette opération puisse requérir le moins de temps possible.

Il existe aujourd'hui une pluralité de procédés permettant de réaliser un tel nettoyage.
Ainsi, il existe des procédés dits de traitement chimique qui consistent dans une première phase, à injecter dans les canalisations, des produits chimiques à forte dose puis à assurer le rinçage des canalisations par plusieurs phases d'injection d'eau froide jusqu'à obtention de l'eau avec les paramètres voulus.

Sans le décrire en détails, il a été constaté que ce procédé requiert un grand nombre d'opérations donc une durée particulièrement importante notamment du fait de la nécessité de rincer. Cette phase de rinçage, après traitement chimique, est particulièrement sensible et requiert beaucoup de précautions pour éviter toute nouvelle contamination.
Malgré cela, l'eau analysée en sortie de circuit est dans certains cas, susceptible de présenter un taux de contamination.

Il existe également d'autres procédés tel celui décrit dans le document WO2010/142924 qui propose un procédé de traitement du circuit d'eau potable d'un aéronef selon le préambule de la revendication 1, un dispositif et un aéronef permettant de le mettre en oeuvre. Le procédé proposait, selon un mode de réalisation, de faire circuler de l'eau chaude à l'intérieur du circuit d'eau potable tout en laissant en place les cartouches de filtration. De plus, le document FR2975928 décrit un autre procédé de nettoyage dynamique des canalisations d'eau d'un véhicule et un dispositif permettant de le mettre en oeuvre. Le procédé proposait de créer une onde de choc dans la conduite à nettoyer. Selon un mode de réalisation, l'eau utilisée pour l'onde de choc était chauffée.

### DESCRIPTION DE L'INVENTION

Partant de cet état de fait, la demanderesse a mené des recherches visant à proposer un procédé de traitement à des fins de nettoyage des canalisations du réseau d'eau potable d'un aéronef sans les inconvénients des procédés de l'art antérieur.

Ces recherches ont abouti à la conception d'un procédé de traitement à des fins de nettoyage des canalisations du réseau d'eau potable d'un aéronef, réseau du type de celui comprenant au moins un réservoir de stockage et une pluralité de canalisations proposant une pluralité de points d'entrée et de sortie de l'eau. Ce procédé comprend les opérations suivantes :
- injection d'eau à haute température entre cinquante et cent degrés celsius dans le réseau à des fins de traitement,
- vidange.
Ce procédé est particulièrement avantageux en ce qu'il comprend aussi les opérations suivantes :
- injection d'eau froide ne dépassant pas trente degrés Celsius associée à des produits de traitement chimique comprenant un produit chloré ou du peroxyde d'hydrogène,
- vidange,
- injection d'eau à haute température entre cinquante et cent degrés Celsius à des fins de rinçage en éliminant les produits de traitement chimique comprenant un produit chloré ou du peroxyde d'hydrogène,
- vidange.

Ce procédé présente de nombreux avantages décrits ci-dessous.

Ainsi, la première injection d'eau chaude a pour effet de liquéfier les matières organiques ou graisseuses qui seront ensuite évacuées et d'éliminer au moins partiellement les bactéries.

L'injection de produits chimiques comprenant un produit chloré ou du peroxyde d'hydrogène, permet de désagréger le biofilm qui aurait résisté à la première injection d'eau chaude notamment en tuant chimiquement les bactéries. La première phase permet ainsi de dissoudre la couche graisseuse que le produit chimique n'aurait pu pénétrer. Le procédé permet ainsi d'associer désinfection par eau chaude et désinfection chimique.
Enfin, le rinçage par eau chaude assure une élimination plus rapide des produits désinfectants et un complément de traitement. La deuxième injection d'eau chaude a une fonction de rinçage, c'est à dire d'élimination des produits de traitement. Le procédé propose ainsi de reproduire une même phase d'injection d'eau chaude à des fins d'effets techniques principaux différents à savoir, pour la première phase, le traitement, et pour la troisième phase, le rinçage du traitement de la deuxième phase.

En effet, le principal effet technique de ce nouveau procédé réside dans la réduction de la durée de la phase de nettoyage du fait d'une part, de la complémentarité des méthodes de traitement entre l'eau chaude et les produits chimiques et d'autre part, de la faible durée de vie de ces derniers dans un environnement plus chaud. Les produits chimiques utilisés comprenant un produit chloré ou du peroxyde d'hydrogène sont facilement éliminés au contact de l'eau chaude de rinçage.
Ainsi par exemple, alors que le rinçage par eau froide requérait deux à trois passages d'eau dans les canalisations, le rinçage par eau chaude permet de réduire à un seul passage. L'eau n'est pas alors exploitée principalement comme moyen de traitement mais comme moyen de rinçage et d'élimination des produits désinfectants préalablement injectés.

Un autre effet technique de ce procédé réside dans la réduction des proportions de produits chimiques à injecter du fait d'une phase préalable de traitement par eau chaude. Cette réduction participe à la préservation le plus longtemps possible des caractéristiques des canalisations. Selon une première constatation, la mise en oeuvre du procédé de l'invention fait apparaître une division de 2 à 10 fois les proportions jusqu'ici utilisées.

La succession des trois opérations/injections permet d'optimiser l'utilisation de certains produits. Ainsi, par exemple, du fait de la réalisation préalable d'un traitement par eau chaude, le peroxyde d'hydrogène est utilisé seul sans activateur (tel du sel d'argent).

De plus, cette succession permet de créer et d'exploiter un choc thermique dans les canalisations.

En outre, alors que la phase de rinçage par eau froide succédant à l'injection d'eau avec produit chimique requérait beaucoup de précaution pour éviter toute nouvelle contamination, l'utilisation d'eau chaude assure une protection contre cette dernière.
Ainsi, le procédé de l'invention ne constitue pas une simple succession de phases susceptibles d'être déjà connues mais requiert leur adaptation, leur suppression partielle ou provoque leur optimisation.
Il apparaît alors que le procédé de l'invention permet d'obtenir des résultats supérieurs à ceux obtenus par les procédés de l'art antérieur. Il réduit les coûts en produits de traitement mais surtout en durée d'immobilisation au sol de l'aéronef. Il permet enfin de rendre plus pratique la phase de rinçage en évitant certaines précautions jusqu'ici nécessaires pour éviter toute recontamination.

La demanderesse a constaté la division par deux, du temps nécessaire au traitement à des fins de nettoyage d'un réseau d'eau potable d'un aéronef.

Afin de favoriser le choc thermique mais également de gagner du temps, le procédé de l'invention prévoit avantageusement de distinguer/séparer (et donc de contrôler) la vidange du ou des réservoirs de celle des canalisations.
Ainsi, si selon une caractéristique, le procédé consiste à démarrer la deuxième et/ou la troisième injection une fois le réservoir et les canalisations vidangés, une autre caractéristique du procédé consiste à démarrer la deuxième et/ou la troisième injection une fois le réservoir seul vidangé. Les contrastes thermiques sont alors plus prononcés et les opérations de remplissage du ou des réservoirs peuvent alors être réalisées en temps caché.

Le procédé de traitement s'applique au réseau d'eau potable d'un aéronef, le réseau étant du type de celui comprenant au moins un réservoir de stockage, une pluralité de canalisations proposant une pluralité de points d'entrée et de sortie de l'eau, en consistant
- à remplir ledit réservoir au moyen du liquide de traitement,
- à faire circuler ledit liquide de traitement dans le réseau. Lorsque l'aéronef est du type de celui où le réseau d'eau potable comprend des moyens de filtration comprenant des cartouches de filtration démontables équipant certaines canalisations, lesdites cartouches étant disposées dans les bols formant avec ces dernières, les moyens de filtration équipant les points de sortie d'eau tels ceux utilisés pour alimenter les robinets de lavage ou ceux utilisés pour la restauration dans les aéronefs, moyens de filtration à travers lesquels l'eau doit passer avant d'atteindre le robinet. Le procédé de l'invention est remarquable en ce que lesdites cartouches de filtration ne sont pas retirées durant l'ensemble des opérations. Ainsi le procédé consiste alors
- à ne pas retirer les cartouches de filtration,
- à faire circuler le liquide de traitement dans le réseau avec les cartouches installées.
Le maintien en place des moyens de filtration est rendu plus facile à mettre en oeuvre du fait de la mise en oeuvre préalable d'une phase de traitement par eau chaude et d'une phase de rinçage eau chaude après traitement chimique, qui rend plus rapide encore le procédé.

Selon une autre caractéristique, lesdites cartouches sont retirées durant l'ensemble des opérations.

Selon une autre caractéristique particulièrement avantageuse de l'invention, une phase de nettoyage dynamique est mise en oeuvre avant l'injection d'eau à haute température à des fins de traitement.
Ce procédé consiste :
- à créer une onde de choc dans les canalisations à nettoyer, en remplissant partiellement un volume par un liquide,
- à remplir le volume non occupé par le liquide par du gaz sous pression,
- à libérer le liquide à travers un étranglement communiquant avec l'extrémité de la ou desdites canalisations à nettoyer dont l'autre extrémité est ouverte tout en maintenant la pression, de façon :
- à créer un déplacement accéléré du liquide dans un premier temps et du mélange de gaz et de liquide se créant dans un deuxième temps puis
- à générer une onde de choc, une fois le volume vidé, onde de choc se propageant à travers le mélange.

Selon une autre caractéristique particulièrement avantageuse, le procédé consiste durant la première phase d'injection d'eau, à haute température à des fins de traitement, à créer une onde de choc dans les canalisations à nettoyer,
en remplissant partiellement le réservoir de l'aéronef par l'eau à haute température, et
- à remplir le volume non occupé par l'eau par du gaz sous pression,
- à libérer l'eau à travers un étranglement communiquant avec l'extrémité de la ou desdites canalisations à nettoyer dont l'autre extrémité est ouverte tout en maintenant la pression,
de façon :
- à créer un déplacement accéléré de l'eau dans un premier temps et du mélange de gaz et de liquide se créant dans un deuxième temps puis
- à générer une onde de choc une fois le volume vidé, onde de choc se propageant à travers le mélange.

On comprend que le procédé, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention telle que définie par les revendications.

## Revendications

1. Procédé de traitement à des fins de nettoyage des canalisations du réseau d'eau potable d'un aéronef, réseau du type de celui comprenant au moins un réservoir de stockage et une pluralité de canalisations proposant une pluralité de points d'entrée et de sortie de l'eau, comprenant les opérations suivantes
- injection d'eau à haute température entre cinquante et cent degrés Celsius dans le réseau à des fins de traitement,
- vidange,
**CARACTÉRISÉ EN CE QU'**il comprend ensuite les opérations suivantes :
- injection d'eau froide ne dépassant pas trente degrés Celsius associée à des produits de traitement chimique comprenant un produit chloré ou du peroxyde d'hydrogène,
- vidange,
- injection d'eau à haute température entre cinquante et cent degrés Celsius à des fins de rinçage en éliminant les produits de traitement chimique comprenant un produit chloré ou du peroxyde d'hydrogène,
- vidange.

2. Procédé de traitement selon la revendication 1, le réseau comprenant des moyens de filtration comprenant des cartouches de filtration démontables équipant certaines canalisations, lesdites cartouches étant disposées dans les bols formant avec ces dernières, les moyens de filtration équipant les points de sortie d'eau tels ceux utilisés pour alimenter les robinets de lavage ou ceux utilisés pour la restauration dans les aéronefs, moyens de filtration à travers lesquels l'eau doit passer avant d'atteindre le robinet, **CARACTÉRISÉ EN CE QUE** les cartouches de filtration ne sont pas retirées pendant l'ensemble des opérations.

3. Procédé de traitement selon la revendication 1, le réseau comprenant des moyens de filtration comprenant des cartouches de filtration démontables équipant certaines canalisations, lesdites cartouches étant disposées dans les bols formant avec ces dernières, les moyens de filtration équipant les points de sortie d'eau tels ceux utilisés pour alimenter les robinets de lavage ou ceux utilisés pour la restauration dans les aéronefs, moyens de filtration à travers lesquels l'eau doit passer avant d'atteindre le robinet, **CARACTÉRISÉ EN CE QUE** lesdites cartouches sont retirées durant l'ensemble des opérations.

4. Procédé selon la revendication 1, **CARACTÉRISÉ EN CE QU'**il consiste, avant injection de l'eau à haute température à des fins de traitement,
- à créer une onde de choc dans les canalisations à nettoyer, en remplissant partiellement un volume par un liquide,
- à remplir le volume non occupé par le liquide par du gaz sous pression,
- à libérer le liquide à travers un étranglement communiquant avec l'extrémité de la ou desdites canalisations à nettoyer dont l'autre extrémité est ouverte tout en maintenant la pression,
de façon :
- à créer un déplacement accéléré du liquide dans un premier temps et du mélange de gaz et de liquide se créant dans un deuxième temps puis
- à générer une onde de choc une fois le volume vidé, onde de choc se propageant à travers le mélange.

5. Procédé selon la revendication 1, **CARACTÉRISÉ EN CE QU'**il consiste durant la première phase d'injection d'eau à haute température à des fins de traitement, à créer une onde de choc dans les canalisations à nettoyer,
en remplissant partiellement le réservoir de l'aéronef par l'eau à haute température, et
- à remplir le volume non occupé par l'eau par du gaz sous pression,
- à libérer l'eau à travers un étranglement communiquant avec l'extrémité de la ou desdites canalisations à nettoyer dont l'autre extrémité est ouverte tout en maintenant la pression,
de façon :
- à créer un déplacement accéléré de l'eau dans un premier temps et du mélange de gaz et de liquide se créant dans un deuxième temps puis
- à générer une onde de choc une fois le volume vidé, onde de choc se propageant à travers le mélange.

6. Procédé selon la revendication 1, **CARACTÉRISÉ PAR LE FAIT QU'**il consiste à démarrer la deuxième et la troisième opération une fois le réservoir et les canalisations vidangés.

7. Procédé selon la revendication 1, **CARACTÉRISÉ PAR LE FAIT QU'**il consiste à démarrer la deuxième et la troisième opération une fois le réservoir seul vidangé.

## Patentansprüche

1. Behandlungsverfahren zu Reinigungszwecken der Rohrleitungen des Trinkwassernetzes eines Luftfahrzeugs, wobei das Netz des Typs ist, der mindestens einen Lagertank und mehrere Rohrleitungen umfasst, die mehrere Einlass- und Auslasspunkte des Wassers bieten, das die folgenden Vorgänge umfasst:
- Einspritzen von Wasser mit hoher Temperatur zwischen fünfzig und hundert Grad Celsius in das Netz zu Behandlungszwecken,
- Entleeren,
**dadurch gekennzeichnet, dass** es anschließend die folgenden Vorgänge umfasst:
- Einspritzen von kaltem Wasser, das dreißig Grad Celsius nicht überschreitet, zusammen mit chemischen Behandlungsprodukten, die ein chlorhaltiges Produkt oder Wasserstoffperoxid umfassen,
- Entleeren,
- Einspritzen von Wasser mit hoher Temperatur zwischen fünfzig und hundert Grad Celsius zu Spülzwecken, indem die chemischen Behandlungsprodukte, die ein chlorhaltiges Produkt oder Wasserstoffperoxid enthalten, eliminiert werden,
- Entleeren.

2. Behandlungsverfahren nach Anspruch 1, wobei das Netz Filtermittel umfasst, die demontierbare Filterpatronen umfassen, die bestimmte Rohrleitungen ausstatten, wobei die Patronen in Schalen angeordnet sind, die mit diesen Letzteren die Filtermittel bilden, die die Wasserauslasspunkte wie diejenigen ausstatten, die verwendet werden, um die Waschhähne zu versorgen, oder diejenigen, die für das Catering in den Luftfahrzeugen verwendet werden, wobei durch die Filtermittel das Wasser hindurchgehen muss, bevor es den Hahn erreicht,
**dadurch gekennzeichnet, dass** die Filterpatronen während aller Vorgänge nicht entfernt werden.

3. Behandlungsverfahren nach Anspruch 1, wobei das Netz Filtermittel umfasst, die demontierbare Filterpatronen umfassen, die bestimmte Rohrleitungen ausstatten, wobei die Patronen in Schalen angeordnet sind, die mit diesen Letzteren die Filtermittel bilden, die die Wasserauslasspunkte wie diejenigen ausstatten, die verwendet werden, um die Waschhähne zu versorgen, oder diejenigen, die für das Catering in den Luftfahrzeugen verwendet werden, wobei durch die Filtermittel das Wasser hindurchgehen muss, bevor es den Hahn erreicht,
**dadurch gekennzeichnet, dass** die Patronen während aller Vorgänge entfernt werden.

4. Verfahren nach Anspruch 1, **dadurch gekennzeichnet, dass** es vor dem Einspritzen des Wassers mit hoher Temperatur zu Behandlungszwecken Folgendes umfasst:
- Erzeugen einer Stoßwelle in den zu reinigenden Rohrleitungen, indem ein Raum teilweise mit einer Flüssigkeit gefüllt wird,
- Füllen des nicht von der Flüssigkeit eingenommenen Raums mit Gas unter Druck,
- Freisetzen der Flüssigkeit durch eine Einschnürung, die mit dem Ende der zu reinigenden Rohrleitung(en) in Verbindung steht, deren anderes Ende offen ist, während der Druck aufrechterhalten wird,
so dass:
- zunächst eine beschleunigte Bewegung der Flüssigkeit und anschließend des Gas- und Flüssigkeitsgemischs, das entsteht, erzeugt wird, dann
- eine Stoßwelle, sobald der Raum leer ist, erzeugt wird, wobei sich die Stoßwelle durch das Gemisch ausbreitet.

5. Verfahren nach Anspruch 1, **dadurch gekennzeichnet, dass** es darin besteht, während der ersten Wassereinspritzphase mit hoher Temperatur zu Behandlungszwecken eine Stoßwelle in den zu reinigenden Rohrleitungen zu erzeugen,
indem der Tank des Luftfahrzeugs teilweise mit dem Wasser mit hoher Temperatur gefüllt wird, und
- den nicht von dem Wasser eingenommenen Raum mit Gas unter Druck zu füllen,
- das Wasser durch eine Einschnürung freizusetzen, die mit dem Ende der zu reinigenden Rohrleitung(en) in Verbindung steht, deren anderes Ende offen ist, während der Druck aufrechterhalten wird,
so dass:
- zunächst eine beschleunigte Bewegung des Wassers und anschließend des Gas- und Flüssigkeitsgemischs, das entsteht, erzeugt wird, dann
- eine Stoßwelle, sobald der Raum leer ist, erzeugt wird, wobei sich die Stoßwelle durch das Gemisch ausbreitet.

6. Verfahren nach Anspruch 1, **dadurch gekennzeichnet, dass** es darin besteht, den zweiten und den dritten Vorgang zu starten, sobald der Tank und die Rohrleitungen entleert wurden.

7. Verfahren nach Anspruch 1, **dadurch gekennzeichnet, dass** es darin besteht, den zweiten und den dritten Vorgang zu starten, sobald nur der Tank entleert wurde.

## Claims

1. Method for treating, for cleaning purposes, pipes of the drinking water system of an aircraft, which system includes at least one storage tank and a plurality of pipes offering a plurality of water inlet and outlet points, including the following operations
- injection of high-temperature water at between fifty and one hundred degrees Celsius into the system for cleaning purposes,
- draining,
**characterized in that** it then includes the following operations:
- injection of cold water not exceeding thirty degrees Celsius, associated with chemical treatment products comprising a chlorinated product or hydrogen peroxide,
- draining,
- injection of high-temperature water at between fifty and one hundred degrees Celsius for rinsing by removing the chemical treatment products comprising a chlorinated product or hydrogen peroxide,
- draining.

2. Treatment method according to claim 1, the system comprising filtration means comprising removable filter cartridges provided in certain pipes, said cartridges being arranged in bowls, forming, with the latter, the filtration means provided at water outlet points such as those used to supply the washing sink taps or those used for consumption in aircraft, filtration means through which the water must pass before reaching the tap, **characterized in that** the filtration cartridges are not removed during the whole of the operations.

3. Treatment method according to claim 1, the system comprising filtration means comprising removable filter cartridges provided in certain pipes, said cartridges being arranged in bowls, forming, with the latter, the filtration means provided at water outlet points such as those used to supply the washing sink taps or those used for consumption in aircraft, filtration means through which the water must pass before reaching the tap, **characterized in that** the filtration cartridges are removed during the whole of the operations.

4. Method according to claim 1, **characterized in that** it consists, before the injection of high-temperature water for treatment purposes, in
- creating a shock wave in the pipes to be cleaned, partially filling a volume with a liquid,
- filling the volume not occupied by the liquid with pressurized gas,
- releasing the liquid through a constricted area communicating with the end of said pipe(s) to be cleaned, the other end of which is open while the pressure is maintained, so as to:
- create an accelerated movement of the liquid in a first phase and of the gas and liquid mixture created in a second phase, then
- generating a shock wave, once the volume has been drained, which shock wave is propagated through the mixture.

5. Method according to claim 1, **characterized in that** it consists, during the first phase of injection of high-temperature water for treatment purposes, in creating a shock wave in the pipes to be cleaned,
partially filling the tank of the aircraft with high-temperature water, and
- filling the volume not occupied with water with pressurized gas,
- releasing the water through a constricted area communicating with the end of said pipe(s) to be cleaned, the other end of which is open while the pressure is maintained,
so as to:
- create an accelerated movement of the water in a first phase and of the gas and liquid mixture created in a second phase, then
- generating a shock wave, once the volume has been drained, which shock wave is propagated through the mixture.

6. Method according to claim 1, **characterized by** the fact that it consists in starting the second and third operation once the tank and the pipes have been drained.

7. Method according to claim 1, **characterized by** the fact that it consists in starting the second and third operation once the single tank has been drained.
